# EUROPEAN PATENT SPECIFICATION

(11) **EP 2 370 942 B1**
(45) Date of publication and mention of the grant of the patent: **03.01.2018**
(21) Application number: 09799399.2
(22) Date of filing: 26.11.2009
(51) Int. Cl.: G06Q 30/02

(54) **A METHOD FOR TRANSMITTING ADVERTISEMENTS**
VERFAHREN ZUM ÜBERTRAGEN VON WERBUNG
PROCÉDÉ POUR LA TRANSMISSION DE MESSAGES PUBLICITAIRES

(30) Priority: 01.12.2008 TR 200809212
(43) Date of publication of application: 05.10.2011
(73) Proprietor: Turkcell Teknoloji Arastirma & Gelistirme A.S., 41470 Kocaeli (TR)
(72) Inventor: HUZMELI, Can, 41470 Kocaeli (TR)
(74) Representative: Carangelo, Pierluigi
(86) International application number: PCT/IB2009/055355
(87) International publication number: WO 2010/064173

(56) References cited:
- US-A- 6 009 410
- US-A1- 2006 020 510

## Description

### Field of the Invention

The present invention relates to a server, which enables performing various actions depending on the content of the advertisement transmitted to the user, and to a method for transmitting advertisements.

### Prior Art

In the state of the art, advertisement contents are transmitted to users via various ways through media like cellular phones, televisions and internet. These advertisements transmitted to the user via digital media can be displayed in image, audio or video format as if they are being displayed on Internet, and a URL (Uniform Resource Locator) which will direct the user to another internet page can be displayed in these advertisement contents. When the user clicks on the URL, s/he is connected to the page intended by the advertisement provider.

One of the state of the art applications is described in the Korean patent document KR20010076148. In the application disclosed in the said document; the user, advertisement provider and the advertisement database are connected to each other through a computer communication network. The user is directed to another advertisement page when s/he clicks on the advertisement delivered to her/him by the advertisement provider.

In the state of the art applications, in order for the user's device, to which the advertisement is transmitted, to use its own functions related to the transmitted advertisement, the advertisement application should be preinstalled to the device in the form of software. If a special software related to the advertisement application is not installed to this device, the user can not perform any additional operations on the advertisement which will allow using the features of the device apart from clicking and reaching the page designated by the advertisement provider. For this reason, there are difficulties experienced in the user providing feedback for having read the advertisement content and in following up how much the advertisements reach their target.

Additionally, since applications are installed separately in each device in order for certain advertisement features to be used in the said advertisement transmission methods, the server which will send the advertisement can send the advertisement having the desired features only to the devices to which the application is installed. This situation reduces widespread use of the application hindering use of a common advertisement broadcasting platform.

Another disadvantage in the state of the art is that since each server supports only one protocol, advertisements can not be sent to the devices that do not support this protocol. For example in the state of the art applications, the server communication protocol is developed to comply with the features of the cellular phone if it is going to send data to a cellular phone; or with the features of the television if it is going to send data to a television.

US6009410 A discloses a method and system for presenting customized advertising to a user on the world wide web.

US2006020510 A1 discloses a computerized method for targeting advertisements toward certain groups of on-line users utilizing an advertising server to deliver the advertisements to on-line users.

### Summary of the Invention

The objective of the present invention is to realize an advertisement server which enables performing various operations when the advertisements broadcasted in digital media are clicked.

Another objective of the invention is to realize an advertisement server which can provide service to all of different types of devices such as mobile devices and televisions due to the fact that it has certain general protocols.

A further objective of the invention is to realize an advertisement server which, when the user reads the advertisement and/or the predetermined action is performed, automatically provides feedback informing how much of the advertisement is viewed by the user.

### Detailed Description of the Invention

The method for transmitting advertisements realized to fulfill the objective of the present invention is illustrated in the accompanying figure wherein,

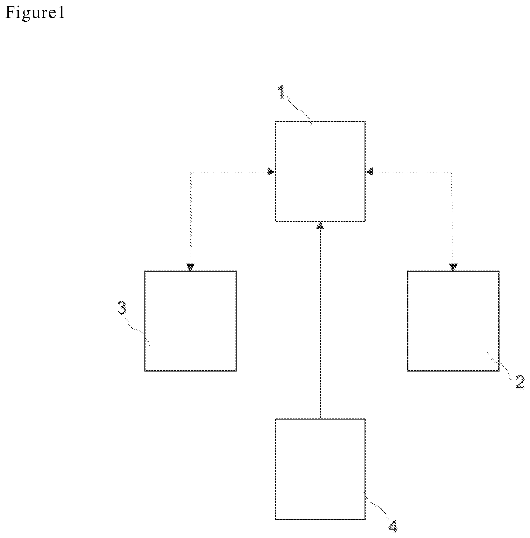

Figure 1 is the schematic view of the assembly wherein the advertisement transmission method is realized.

The parts in the figure are each given a reference numeral where the numerals refer to the following:
1. Server
2. Database
3. Client
4. Advertisement provider

The inventive method for transmitting advertisements is realized by at least one server (1), at least one database (2), at least one client (3) and at least one advertisement provider (4).

The server (1) is a data provider which is connected to the Internet and which enables the advertisement contents to be displayed on the user's device.

The database (2) is the data storage which stores the actions that will be added to the advertisement features.

The client (3) is any device, which is used by the user, having a screen like a computer, cellular phone or a television.

The advertisement provider (4) is the agent, corporation or person which is in communication with the server (1), database (2) and the client (3), and which determines the options of the advertisement contents and/or features.

The inventive method for transmitting advertisements is based on XML based WEB services which is a universal protocol.

In the invention, operations like sending SMS, starting a call, URL routing, VIDEO playing, AUDIO playing are defined as "actions".

In the invention, actions are embedded in the advertisement transmitted to the user according to the advertisement content determined by the advertisement provider (4). When the user clicks on the advertisement sent to her/him, the predetermined action is performed.

Files having advertisement features are kept in the server (1). Advertisement features are features like screen resolution, preferred advertisement sizes, key words of the advertisements, advertisement category, desired multimedia type. The user can choose the advertisement features among the options determined by the advertisement provider (4) or the advertisement provider (4) defines fixed features that will be same for each user.

The actions which are planned to be performed and which constitute the advertisement content are stored in the database (2) completely independent from the files having advertisement features.

In another embodiment of the invention, the client (3) requests advertisement from the server (1) for the feature and/or content desired by the user. If it is the first time that the user is going to request an advertisement from the server (1) through its client (3), s/he first requests from the server (1) the action options that will be added to the advertisement feature and/or advertisement content. The server (1) in turn transmits to the client (3) the features and contents applicable for the client (3) such as category list, multimedia types, action types. Thus the user learns the advertisement features and contents that are applicable to her/his client (3) device.

In another alternative of this embodiment of the invention, attachment of the actions in the database (2) to the advertisement files in the server (1) is performed by the user. In other words, the user decides for herself/himself which advertisement features and action types s/he wants. When any client (3) is going to request an advertisement, in addition to the advertisement features it sends to the server (1) parameters related to what the action will be. Thus, what the action will be is determined by the client (3) and the advertisement having features and contents suitable to the said request are provided by the server (1).

In an embodiment where attachment of the actions in the database (2) to the advertisement files in the server (1) is performed by the user, the method preferably comprises the following steps:
- the client (3) requesting from the server (1) the advertisement feature options and the action options to be added to the advertisement content (201),
- the server (1) transmitting to the client (3) the features and contents applicable for the client (3) such as category list, multimedia types, action types (202),
- the user selecting among the content and feature options transmitted to the client (3) and sending the action to be added to the content together with the selected advertisement features to the server (1) via the client (3) (203),
- the server (1) adding to the advertisement content having the desired feature the action which is selected by the user as applicable to the said content and transmitting it to the client (3) (204),
- the defined action taking place when the user clicks on the advertisement sent to her/him (205).

Two counters are used in the inventive advertisement transmission method for obtaining feedback for the advertisements transmitted to the user. The counters are provided in the server (1). The first one of these counters is increased by one each time the server (1) sends an advertisement to the client (3). The first counter denotes that the advertisement is displayed on the client's (3) screen, but a second counter is needed in order to understand whether or not the action operation of the advertisement took place. The second counter is increased by one as the action takes place upon the user clicking on the client's (3) screen. In the method, when the action takes place, the client (3) automatically sends the action parameters to the server (1). Thus the second counter in the server (1) counts the actions by using the action parameters as inputs and the server (1) understands whether or not the actions took place. When the user clicks on the advertisement on the screen, the advertisement achieves its objective. By means of the said two counters, both the number of advertisements viewed on the user's screen and the number of the actions taking place corresponding to the number of viewed advertisements are counted, whereby a feedback is provided successfully. Otherwise, in applications where the client (3) receives advertisement to her/his cellular telephone, when it is not reported by the telephone, it can not be determined whether or not an SMS is sent or a call is made, that is it is clicked on the advertisement as an action.

This invention enables delivering action based advertisements to all kinds of mobile devices via web services protocol. By means of the server (1) and the method developed, a record of the feedbacks for all these actions are also kept. Furthermore, the requirement of the prior art that the action type should be static is also eliminated. This way, any type of client (3) can include in its application the advertisements from any type of media, having any type of actions.

By means of the server (1) and the method developed, advertisements having any type of actions can be drawn from the advertisement broadcasting platform and be displayed. Additionally, the fact that the protocol used by the server (1) has a universal infrastructure (web services) has made this process accessible from all kinds of media such as web sites, cellular phone applications, SIM cards, televisions.

It is possible to develop a wide variety of embodiments of the inventive method for transmitting advertisements. The invention cannot be limited to the examples described herein and it is essentially according to the claims.

## Claims

1. A method for transmitting advertisements, which is performed by at least one server (1) which is a data provider which is connected to the Internet and which enables the advertisement contents to be displayed on the user's device, at least one database (2) which is the data storage which stores the actions that will be added to the advertisement features, at least one client (3) which is any device, which is used by the user, having a screen like a computer, cellular phone or a television and at least one advertisement provider (4) which is the agent, corporation or person which is in communication with the server (1), database (2) and the client (3), and which determines the options of the advertisement contents and/or features, and w her e i n predetermined actions are embedded in the advertisement transmitted to the user according to the predetermined advertisement content, and wherein as the user clicks on the advertisement sent to her/him a predetermined action such as sending SMS, starting a call. URL routing, VIDEO playing, AUDIO playing is performed, the method being **characterized by** the steps of:
- the client (3) requesting from the server (1) the advertisement feature options and the action options to be added to the advertisement content (201),
- the server (1) transmitting to the client (3) the features and contents applicable for the client (3) such as category list, multimedia types, action types (202),
- the user selecting among the content and feature options transmitted to the client (3) and sending the action to be added to the content together with the selected advertisement features to the server (1) via the client (3) (203),
- the server (1) adding to the advertisement content having the desired feature the action which is selected by the user as applicable to the said content and transmitting it to the client (3) (204),
the defined action taking place when the user clicks on the advertisement sent to her/him (205).

2. A method for transmitting advertisements according to claim 1, **characterized by** keeping the files having advertisement features in the server (1).

3. A method for transmitting advertisements according to Claim 2, **characterized by** advertisement features which are screen resolution, preferred advertisement sizes, key words of the advertisements, advertisement category, desired multimedia type.

4. A method for transmitting advertisements according to any of the preceding claims, **characterized by** storing the actions which are planned to be performed and which constitute the advertisement content in the database (2) completely independent from the files having advertisement features.

5. A method for transmitting advertisements according to any of the preceding claims, wherein the advertisements displayed on the client's (3) screen by the server (1), and the times the user performs the action within the said advertisement are counted by means of two counters and by this means providing a feedback successfully from both the number of advertisements viewed on the user's screen and the number of the actions taking place corresponding to the number of viewed advertisements are counted.

6. A method for transmitting advertisements according to Claim 5, wherein, when the server (1) sends an advertisement to the client (3) each time, the first one of these counters is increased by one.

7. A method for transmitting advertisements according to Claim 5, wherein, when the action within the advertisement is performed by the user, the client (3) automatically sends the action parameters to the server (1), and wherein the second counter provided in the server (1) performs counting based on these parameters.

## Patentansprüche

1. Verfahren zum Übertragen von Werbung, das durchgeführt wird von: wenigstens einem Server (1), bei dem es sich um einen Datenanbieter handelt, der mit dem Internet verbunden ist und der die Anzeige der Werbeinhalte auf dem Gerät des Benutzers ermöglicht, wenigstens einer Datenbank (2), bei der es sich um den Datenspeicher handelt, der die Aktionen speichert, die den Werbefunktionen hinzugefügt werden, wenigstens einem Klienten (3), bei dem es sich um ein beliebiges Gerät mit einem Bildschirm wie einen Computer, ein Mobiltelefon oder ein Fernsehgerät, das von dem Benutzer verwendet wird, handelt, und wenigstens einem Werbeanbieter (4), bei dem es sich um den Agenten, die Gesellschaft oder die Person handelt, die mit dem Server (1), der Datenbank (2) und dem Kunden (3) in Verbindung steht und die die Optionen des Werbeinhalts und/oder der Werbefunktion bestimmt,
und wobei vorbestimmte Aktionen in die an den Benutzer übertragene Werbung gemäß dem vorbestimmten Werbeinhalt eingebettet sind, und wobei, wenn der Benutzer auf die ihm zugesandte Werbung klickt, eine vorbestimmte Aktion wie z. B. SMS Senden, Anruf Starten, URL Routen, Video Abspielen, Audio Abspielen ausgeführt wird, wobei das Verfahren **gekennzeichnet ist durch** die folgenden Schritte:
- Anfordern, durch den Klienten (3), von dem Server (1), der Werbefunktionsoptionen und der Aktionsoptionen, die dem Werbeinhalt hinzugefügt werden sollen (201),
- Übertragen, durch den Server (1), an den Klienten (3), der Funktionen und Inhalte, die für den Klienten (3) anwendbar sind, wie zum Beispiel Kategorieliste, Multimediatypen und Aktionstypen (202),
- Auswählen, durch den Benutzer, aus den an den Klienten (3) übertragenen Inhalts- und Funktionsoptionen, und Senden der dem Inhalt hinzuzufügenden Aktionsoptionen zusammen mit den ausgewählten Werbefunktionen über den Klienten (3) an den Server (1) (203),
- Hinzufügen, durch den Server (1), der Aktion, die von dem Benutzer als auf den Inhalt anwendbar ausgewählt wurde, zu dem Werbeinhalt mit dem gewünschten Funktion und Übertragen davon an den Klienten (3) (204),
wobei die definierte Aktion stattfindet, wenn der Benutzer auf die an ihn gesendete Anzeige klickt (205).

2. Verfahren zum Übertragen von Werbung gemäß Anspruch 1, das **gekennzeichnet ist durch** Aufbewahren der Dateien mit den Werbeunktionen auf dem Server (1).

3. Verfahren zum Übertragen von Werbung gemäß Anspruch 2, das **gekennzeichnet ist durch** Werbefunktionen, bei denen es sich um Bildschirmauflösung, bevorzugte Anzeigengröße, Schlüsselwörter der Anzeigen, Anzeigenkategorie und gewünschter Multimediatyp handelt.

4. Verfahren zum Übertragen von Werbung gemäß einem der vorangegangenen Ansprüche, das **gekennzeichnet ist durch** Speichern der Aktionen, deren Durchführung geplant ist und die den Werbeinhalt in der Datenbank (2) ausmachen, vollständig unabhängig von den Dateien mit den Werbefunktionen.

5. Verfahren zum Übertragen von Werbung gemäß einem der vorangegangenen Ansprüche, wobei die durch den Server (1) auf dem Bildschirm des Klienten (3) angezeigten Werbungen und die Anzahl, wie oft der Nutzer die Aktion innerhalb der Werbung durchführt, mittels zweier Zähler gezählt werden, und wobei auf diese Weise ein Feedback sowohl von der Anzahl der auf dem Bildschirm des Nutzers angesehenen Anzeigen als auch von der Anzahl der durchgeführten Aktionen entsprechend der Anzahl der angesehenen Anzeigen erfolgreich durchgeführt wird.

6. Verfahren zum Übertragen von Werbung gemäß Anspruch 5, wobei jedes Mal, wenn der Server (1) eine Anzeige an den Klienten (3) sendet, der erste der Zähler um eins erhöht wird.

7. Verfahren zum Übertragen von Werbung gemäß Anspruch 5, wobei, wenn die Aktion innerhalb der Werbung durch den Benutzer ausgeführt wird, der Klient (3) automatisch die Aktionsparameter an den Server (1) sendet, und wobei der zweite Zähler, der in dem Server (1) zur Verfügung gestellt ist, das Zählen auf der Grundlage dieser Parameter ausführt.

## Revendications

1. Procédé pour la transmission de messages publicitaires, qui est effectué par au moins un serveur (1) qui est un fournisseur de données qui est connecté à Internet et qui permet d'afficher les contenus de message publicitaire sur le dispositif de l'utilisateur, au moins une base de données (2) qui est le stockage de données qui stocke les actions qui seront ajoutées aux caractéristiques de message publicitaire, au moins un client (3) qui est n'importe quel dispositif, qui est utilisé par l'utilisateur, ayant un écran comme un ordinateur, un téléphone cellulaire ou une télévision et au moins un fournisseur de messages publicitaires (4) qui est l'agent, l'entreprise ou la personne qui est en communication avec le serveur (1), la base de données (2) et le client (3), et qui détermine les options des contenus et/ou des caractéristiques du message publicitaire, et dans lequel des actions prédéterminées sont incorporées dans le message publicitaire transmis à l'utilisateur en fonction du contenu de message publicitaire prédéterminé, et dans lequel, lorsque l'utilisateur clique sur le message publicitaire qui lui a été envoyé, une action prédéterminée telle qu'un envoi de SMS, un déclenchement d'appel, un routage URL, une lecture de VIDEO, une lecture de signal AUDIO est effectuée, le procédé étant **caractérisé par** les étapes suivantes :
- demande par le client (3) auprès du serveur (1) des options de caractéristiques de message publicitaire et des options d'action à ajouter au contenu de message publicitaire (201),
- transmission par le serveur (1) au client (3) des caractéristiques et des contenus applicables pour le client (3) tels qu'une liste de catégories, des types de multimédias, des types d'actions (202),
- sélection par l'utilisateur parmi les options de contenu et de caractéristique transmises au client (3) et envoi de l'action à ajouter au contenu, conjointement aux caractéristiques de message publicitaire sélectionnées, au server (1) par le biais du client (3) (203),
- ajout par le serveur (1), au contenu de message publicitaire ayant la caractéristique désirée, de l'action qui est sélectionnée par l'utilisateur comme applicable audit contenu, et sa transmission au client (3) (204),
l'action définie se produisant quand l'utilisateur clique sur le message publicitaire qui lui a été envoyé (205).

2. Procédé pour la transmission de messages publicitaires selon la revendication 1, **caractérisé en ce que** les fichiers ayant des caractéristiques de message publicitaire sont conservés dans le serveur (1).

3. Procédé pour la transmission de messages publicitaires selon la revendication 2, **caractérisé par** des caractéristiques de message publicitaire qui sont une résolution d'écran, des tailles de message publicitaire préférées, des mots clés des messages publicitaires, une catégorie de message publicitaire, un type de multimédia désiré.

4. Procédé pour la transmission de messages publicitaires selon l'une quelconque des revendications précédentes, **caractérisé par** le stockage des actions qui sont planifiées pour être exécutées et qui constituent le contenu de message publicitaire dans la base de données (2) complètement indépendant par rapport aux fichiers ayant des caractéristiques de message publicitaire.

5. Procédé pour la transmission de messages publicitaires selon l'une quelconque des revendications précédentes, dans lequel les messages publicitaires affichés sur l'écran du client (3) par le serveur (1) et le nombre de fois que l'utilisateur effectue l'action dans ledit message publicitaire sont comptés au moyen de deux compteurs et fournissant par ce moyen un retour avec succès à partir à la fois du nombre de messages publicitaires affichés sur l'écran du client et du nombre des actions se produisant correspondant au nombre de messages publicitaires affichés sont comptés.

6. Procédé pour la transmission de messages publicitaires selon la revendication 5, dans lequel, quand le serveur (1) envoie un message publicitaire au client (3), chaque fois, le premier de ces compteurs est incrémenté de un.

7. Procédé pour la transmission de messages publicitaires selon la revendication 5, dans lequel, quand l'action dans le message publicitaire est effectuée par l'utilisateur, le client (3) envoie automatiquement les paramètres d'action au serveur (1), et dans lequel le deuxième compteur dont est pourvu le serveur (1) effectue un comptage sur la base de ces paramètres.
